# EUROPEAN PATENT APPLICATION

(11) **EP 4 744 737 A1**
(43) Date of publication of application: **20.05.2026**
(21) Application number: 24213142.3
(22) Date of filing: 15.11.2024
(51) Int. Cl.: A62B 18/08

(54) **A VOICE TRANSMISSION ASSEMBLY FOR A FACE MASK**

(71) Applicant: Savox Communications Oy Ab (Ltd), 02150 Espoo (FI)
(72) Inventor: HUHTAKALLIO, Ilkka, 09930 Leppäkorpi (FI); GÓMEZ BOLAÑOS, Javier, 03100 Nummela (FI)
(74) Representative: Berggren Oy

(57) **Abstract**

According to an embodiment, a sound transmission assembly (100) for a respirator apparatus that comprises as a mouth-covering mask (10) to be worn by a user of the respirator apparatus is provided, the sound transmission assembly (100) comprising: at least one vibration sensor assembly (110) arranged to generate a speech signal based on vibrations sensed on an outer surface of said mask (10); and a sound application assembly (130) arranged to apply the speech signal obtained from the at least one vibration sensor assembly (110).

## Description

### TECHNICAL FIELD

The present invention relates to sound transmission in context of a respirator apparatus comprising a mask to be worn by a user of the respirator apparatus.

### BACKGROUND

Respirator apparatuses of different type are typically worn for protective purposes by people working or otherwise residing in environments where breathing would otherwise be harmful, difficult, hazardous or even impossible. Such a respirator apparatus inherently involves a mask to be worn by a user of the respirator apparatus such that covers the mouth of the user, thereby disturbing the user's voice communication with other persons - while on the other hand in many usage scenarios voice communication is crucial for safety of the user of the respirator apparatus and/or for taking care of the task at hand.

Respirator apparatuses come in various types, depending on their specific purpose and the mask included therein may cover the face of the user of the respirator apparatus partially or substantially in entirety. Such apparatuses may also be referred to as respirators, as breathing apparatuses, as face pieces, as face masks, as breathing masks, etc. However, in the present disclosure the term respirator apparatus is applied to refer to any wearable apparatus that comprises a mask covering the mouth of a user of the respirator apparatus in a manner that disturbs voice communication with other persons.

A known solution for mitigating the disturbance to the voice communication involves providing the respirator apparatus with a microphone for capturing an audio signal that represents the speech uttered by a user wearing the mask of the respirator apparatus, whereas the signal captured by the microphone may be rendered via a loudspeaker to the environment of the user and/or transmitted over a communication channel to another apparatus. In such a solution the microphone may be provided inside the mask of the respirator apparatus or outside the mask of the respirator apparatus, whereas the loudspeaker (if applicable) is typically provided outside the mask on the exterior of the respirator apparatus. Both arrangements for placing the microphone involve some challenges: a microphone arranged inside the mask (i.e. in 'clean space') results in humidity accumulating into the microphone and it also requires routing an electrical connection through the mask to the loudspeaker provided on the exterior of the respirator apparatus (if applicable), whereas a microphone arranged outside the mask (i.e. in 'dirty space') suffers from a less natural sound quality due to the speech captured therein first transferring through the mask (e.g. via an inhale or exhale vent of the respirator apparatus) while it is also prone to capture environmental noises that are not part of the speech uttered by the user wearing the mask of the respirator apparatus and it also suffers from acoustic feedback (also known as the Larsen effect) from the loudspeaker (if applicable).

### SUMMARY

It is an object of the present invention to provide an improved technique for conveying speech uttered by a user wearing a mask of a respirator apparatus for one or more sound applications.

According to an embodiment, a sound transmission assembly for a respirator apparatus that comprises as a mouth-covering mask to be worn by a user of the respirator apparatus is provided, the sound transmission assembly comprising: at least one vibration sensor assembly arranged to generate a speech signal based on vibrations sensed on an outer surface of said mask; and a sound application assembly arranged to apply the speech signal obtained from the at least one vibration sensor assembly.

According to another embodiment, a respirator apparatus is provided, the respirator apparatus comprising: a mouth-covering mask to be worn by a user of the respirator apparatus; and a sound transmission assembly according to the embodiment described in the foregoing.

According to an embodiment, a method for sound transmission for a respirator apparatus that comprises a mouth-covering mask to be worn by a user of the respirator apparatus is provided, the method comprising: generating a speech signal based on vibrations sensed on an outer surface of said mask; and applying the generated speech signal.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and to its operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some components of a sound transmission assembly according to an example;
Figures 2A schematically illustrates some components of a sound transmission assembly according to an example together with an exemplifying mask of a respirator apparatus worn by a person;
Figures 2B schematically illustrates some components of a sound transmission assembly according to an example together with an exemplifying mask of a respirator apparatus worn by a person;
Figure 3A schematically illustrates some components of a vibration sensor assembly according to an example;
Figure 3B schematically illustrates some components of a vibration sensor assembly according to an example;
Figure 4A illustrates a block diagram of some components of a sound transmission assembly according to an example;
Figure 4B illustrates a block diagram of some components of a sound transmission assembly according to an example;
Figure 4C illustrates a block diagram of some components of a sound transmission assembly according to an example;
Figure 5 illustrates a method according to an example, and
Figure 6 illustrates a block diagram of some components of an apparatus according to an example.

### DESCRIPTION OF SOME EMBODIMENTS

Along the lines described in the foregoing, the present disclosure relates to a technique for transmitting speech uttered by a person who is a user of a respirator apparatus and wearing a mask of the respirator apparatus to recipients residing in physical environment of the user and/or to remote recipients. In this regard, the mask typically covers the mouth of the user and, consequently, undisturbed transmission of the speech of the user wearing the mask requires special measures, whereas the present disclosure describes a technique for speech transmission in such a framework via various examples.

Along the lines discussed in the foregoing, the respirator apparatus may be also referred to as a respirator, as a breathing apparatus, as a face piece, as a breathing mask, as a face mask, etc. In this regard, the technique described in the present disclosure is applicable to any respirator apparatus that comprises a mask to be worn by a person using the respirator apparatus such that the mask covers the mouth of the user in a manner that disturbs voice communication with other persons. In various non-limiting examples, the respirator apparatus under consideration may comprise an air-purifying respirator (APR) or for a powered air-purifying respirator (PAPR) provided with a half-face mask or an APR, a PAPR or a self-contained breathing apparatus (SCBA) provided with a full-face mask. In this regard, a half-face mask typically covers the mouth and nose of a user wearing the mask, whereas a full-face mask further provides protection also for the eyes of the user wearing the mask.

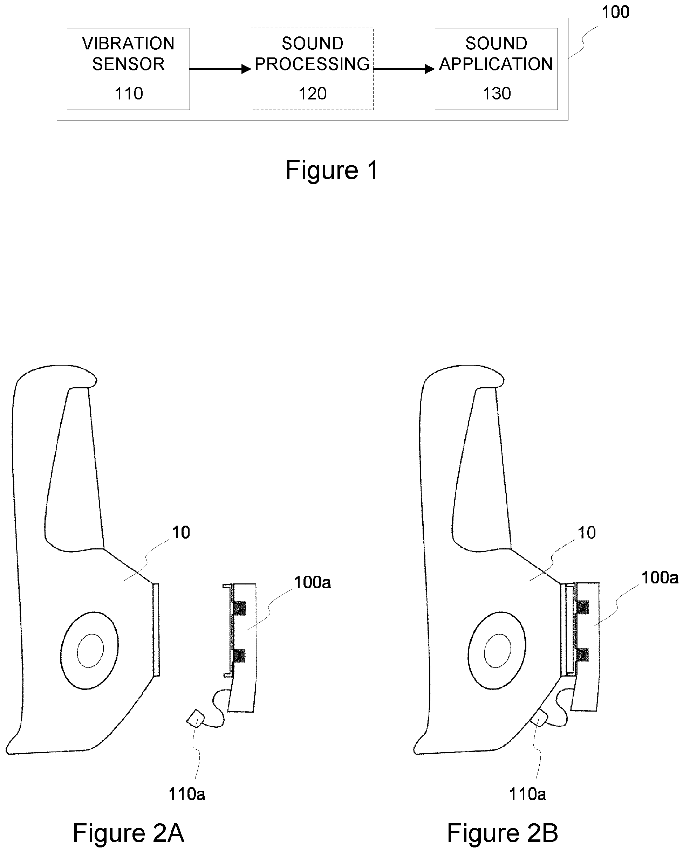

Figure 1 illustrates a block diagram of some components of a sound transmission assembly 100 according to an example, where the sound transmission assembly 100 is provided for use with a respirator apparatus of a kind described in the foregoing. The sound transmission assembly 100 comprises a vibration sensor assembly 110 arranged to generate a speech signal based on vibrations sensed on an outer surface of the mask of the respirator apparatus and a sound application assembly 130 arranged to apply the speech signal obtained from the vibration sensor assembly 110. Optionally, the sound transmission assembly 100 further comprises a sound processing portion 120 arranged to preprocess the speech signal obtained from the vibration sensor assembly 110 before passing it for application by the sound application assembly 130. The vibration sensor assembly 110 is communicatively coupled to the sound application assembly 130 e.g. by a connection cable to enable supplying the speech signal generated in the vibration sensor assembly 110 to the sound application assembly 130. In case the optional sound processing portion 120 is applied, the connection cable is also applied to supply the speech signal from the vibration sensor assembly 110 to the sound processing portion 120.

In various examples, the sound application assembly 130 may comprise one or more sound application sub-assemblies that each make use of the speech signal obtained from the vibration sensor assembly 110 in a manner different from that of the other sound application sub-assemblies. Non-limiting examples of respective functionalities provided by such sound application sub-assemblies include (local) reproduction of the speech signal at the sound transmission assembly 100, delivery of the speech signal from the sound transmission assembly 100 to another apparatus, (local) processing of the speech signal at the sound transmission assembly 100.

Respective illustrations of Figures 2A and 2B schematically illustrate some (further) components of the sound transmission assembly 100 according to a non-limiting example together with the mask 10 of the respirator apparatus to be worn by a user of the respirator apparatus. In this regard, the illustration of Figure 2A shows a main housing 100a that includes at least some components of the sound transmission assembly 100 and a sensor housing 110a that includes at least some components of the vibration sensor assembly 110 separately from the mask 10, whereas the illustration of Figure 2B shows the main housing 100a mounted to the mask 10 and the sensor housing 110a attached to the mask 10.

In various examples, the sound application assembly 130 may be implemented as hardware or as a combination of hardware and software. Depending on respective characteristics and functionalities of the one or more sound application sub-assemblies of the sound application assembly 130, the hardware involved may comprise one or more electrical circuits and/or one or more special-purpose electrical and/or electro-mechanical components. Moreover, in case of a combination of hardware and software is applied in implementing the sound application assembly 130, the hardware involved comprises a memory and a processor, where the memory stores instructions that, when executed by the processor, cause implementing at least some aspects of respective functionalities of the one or more sound application sub-assemblies of the sound application assembly 130. In case the sound transmission assembly 100 comprises the optional sound processing portion 120, the hardware or the combination of the hardware and software applied for implementing the sound application assembly 130 may be further applied to implement at least some aspects of the functionality of the sound processing portion 120.

According to an example, the hardware applied for implementing the sound application assembly 130 is provided in the main housing 100 that is mountable (or mounted) to the mask 10 and dismountable from the mask 10, whereas components that constitute the vibration sensor assembly 110 are provided in the sensor housing 110a, which may be brought into contact with the outer surface of the mask 10 of the respirator apparatus. The main housing 100a and/or the mask 10 may be provided with a mounting mechanism that enables mounting the main housing 100a to the mask 10 and dismounting the main housing 100afrom the mask 10. In an example, the sensor housing 110a forms part of the main housing 100a (as in the illustrations of Figures 2A and 2B) such that it is brought into a contact with the outer surface of the mask 10 when the main housing 100a is mounted to the mask 10, whereas in another example the sensor housing 110a is separate from the main housing 100a and the sensor housing 110a is separately attachable (or attached) to the mask 10 and detachable from the mask 10 separately from the main housing 100a. In the latter example, the sensor housing 110a may be coupled to the main housing 100a with a cord with the connecting cable routed through the cord.

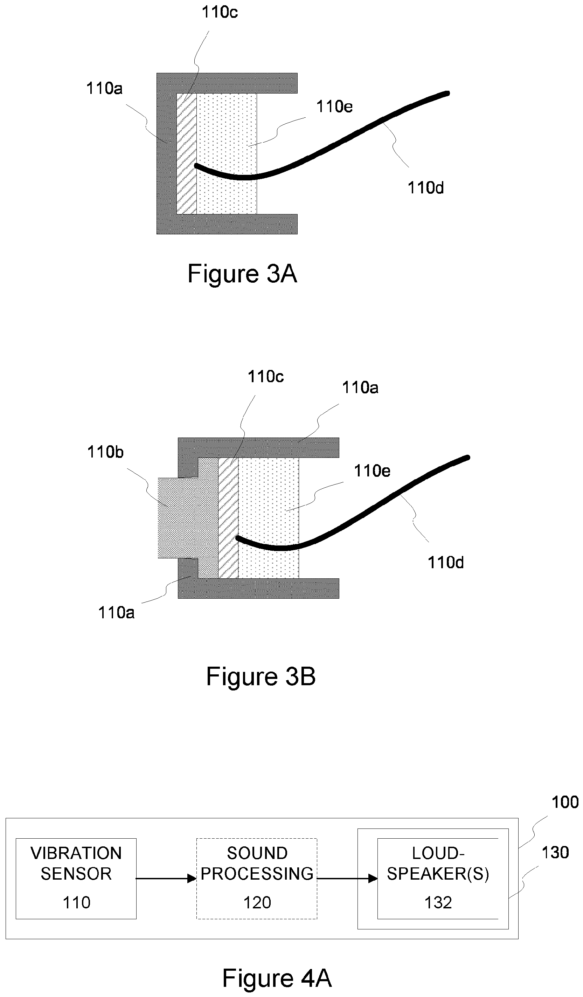

In general, the vibration sensor assembly 110 comprises a vibration sensor for capturing vibrations induced to the mask 10 by the speech uttered by the user wearing the mask 10 and to generate the speech signal from the vibrations sensed by the vibration sensor. In this regard, the vibration sensor assembly 110 may be brought in contact with the outer surface of the mask 10 to capture the vibrations induced therein. Respective non-limiting illustrative examples the vibration sensor assembly 110 are described in the following with references to Figures 3A and 3B.

Figure 3A introduces some aspects of the vibration sensor assembly 110 according to an example via schematic illustration of its cross-section. In particular, the vibration sensor assembly 110 according to the example of Figure 3A comprises a vibration sensor 110c arranged into contact with the sensor housing 110a to generate the speech signal from vibrations induced to the vibration sensor 110c via the sensor housing 110a brought in contact with the outer surface of the mask 10. In this regard, any vibration occurring on the outer surface of the mask 10 causes a corresponding vibration of the sensor housing 110a, which in turn transfers the vibration to the vibration sensor 110c that is in contact therewith. The connection cable 110d is coupled to the vibration sensor 110c to supply the speech signal generated therein to the sound application assembly 130 (and, optionally, to the sound processing portion 120).

Figure 3B introduces some aspects of the vibration sensor assembly 110 according to another example via schematic illustration of its cross-section. In particular, the vibration sensor assembly 110 according to the example of Figure 3B comprises a sensor tip 110b for arrangement into contact with the outer surface of the mask 10 and the vibration sensor 110c arranged into contact with the sensor tip 110b to generate the speech signal from vibrations induced to the vibration sensor 110c via the sensor tip 11 0b. In this regard, any vibration occurring on the outer surface of the mask 10 causes a corresponding vibration of the sensor tip 110b, which in turn transfers the vibration to the vibration sensor 110c that is in contact therewith. As in the example of Figure 3A, the connection cable 110d is coupled to the vibration sensor 110c to supply the speech signal generated therein to the sound application assembly 130 (and, optionally, to the sound processing portion 120).

Still referring to the example of Figure 3B, the sensor tip 110b and the vibration sensor 110c are arranged within the sensor housing 110a such that one end of the sensor tip 110b protrudes from an opening at an end of the sensor housing 110a with the other end of the sensor tip 110b in contact with a first side of the vibration sensor 110c. A volume at a second side of the vibration sensor 110c (which is a side opposite to the first side) may include an elastic member 110e arranged in contact with the second side of the vibration sensor 110c, the elastic member 110e thereby pushing the vibration sensor 110c against the sensor tip 110b to ensure maintaining the contact therebetween despite vibrating movement of the sensor tip 110b.

It is worth noting that the structure and operating principle of the vibration sensor assembly 110 described herein with references to the respective illustrations of Figures 3A and 3B serve as non-limiting examples, whereas in other examples a structure and operation different from that described with references to Figures 3A and 3B may be applied instead. In particular, any structure that enables conveying the vibrations from the outer surface of the mask 10 to the vibration sensor 110c of the vibration sensor assembly 110 is applicable for the purpose.

Along the lines described in the foregoing, in some examples, the sensor housing 110a forms part of the main housing 100a and it is designed in consideration of the shape of the mask 10 such that the vibration sensor assembly 110 is brought into contact with the outer surface of the mask 10 when the main housing 100a is mounted to the mask 10. In such an arrangement, a dedicated attachment mechanism for attaching the vibration sensor assembly 110 to the mask 10 is typically not necessary. In examples where the sensor housing 110a is separate from the main housing 100a, the vibration sensor assembly 110 and/or the mask 10 may be provided with an attachment mechanism that enables attaching the vibration sensor assembly 110 to the mask 10 such that the vibration sensor assembly 110 is brought into a contact with the outer surface of the mask 10. While many different designs in this regard are applicable, in a non-limiting example the attachment mechanism involves a recess provided in the mask 10, where the recess has a shape and size that substantially match the outline of the sensor housing 110a and that is hence able to receive the sensor housing 110a. In this regard, the recess may have a circular cross-section and the sensor housing 110a may have a substantially tubular shape with a cross-section substantially matching that of the recess. The recess in the mask 10 may be provided specifically for the purpose of receiving the sensor housing 110a or it may also serve another purpose. As an example of the latter, the recess may be a hydration hose socket provided in the mask 10.

Figure 4A illustrates the sound transmission assembly 100 according to a first example within the framework of Figure 1, where the sound application assembly 130 comprises a loudspeaker assembly 132 arranged to reproduce the speech signal at the location of the user (i.e. at the location of the respirator apparatus). Optionally, the sound transmission assembly 100 according to the first example further comprises the sound processing portion 120 arranged to preprocess the speech signal obtained from the vibration sensor assembly 110 before passing it for reproduction via the loudspeaker assembly 132. Hence, the sound transmission apparatus 100 according to the first example is applicable for locally reproducing the speech uttered by a user of the respirator apparatus wearing the mask 10 of the respirator apparatus, thereby conveying the speech uttered by the user to one or more other persons residing in his/her proximity.

The loudspeaker assembly 132 is mountable (or mounted) to the mask 10 and dismountable from the mask 10. In this regard, the loudspeaker assembly 132 and/or the mask 10 may be provided with a mounting mechanism that enables mounting the main housing 100a to the mask 10 and dismounting the main housing 100a from the mask 10. According to an example, the loudspeaker assembly 132 is provided in the main housing 100a of the voice transmission assembly 100 and it is hence mountable (or mounted) to the mask 10 and dismountable from the mask 10 together with the main housing 100a. The loudspeaker assembly 132 comprises one or more loudspeaker elements together with electrical connections that enable supplying the speech signal received from the vibration sensor assembly 110 (or from the sound processing portion 120, if applied) for reproduction via the one or more loudspeaker elements.

According to an example, the sound transmission assembly 100 further comprises an isolation member for arrangement between the loudspeaker assembly 132 and the mask 10 when the loudspeaker assembly 132 is mounted to the mask 10. In other words, the loudspeaker assembly 132 is mountable (or mounted) to the mask 10 such that the isolation member is arranged between the loudspeaker assembly 132 and the mask 10. The isolation member is arranged to suppress (or even eliminate) transmission of vibrations induced in the loudspeaker assembly 132 upon reproduction of the speech signal, thereby supressing (or eliminating) feedback of vibrations occurring in the loudspeaker assembly 132 via the mask 10 to the vibration sensor assembly 110. In various examples, the isolation member may be made of elastic material that absorbs at least part of the vibrations or the isolation member may comprise a mechanical arrangement, e.g. a spring assembly, arranged to absorb at least part of the vibrations. In various examples, the isolation member may be provided as a component of the loudspeaker assembly 132, as a component of the main housing 100a, or as a separate component to be placed between the loudspeaker assembly 132 and the mask 10 upon mounting the loudspeaker assembly 132 (or the main housing 100a) to the mask 10.

If the first example is implemented with the optional sound processing portion 120, the preprocessing applied therein may comprise amplification of the speech signal before its reproduction by the loudspeaker assembly 132. In this regard, the amplification may be carried out based on a predefined amplification factor or the amplification may be carried based on a user-adjustable or user-selectable amplification factor. In the latter approach, the amplification factor may be determined based on user input received via a user interface (UI) of the sound transmission assembly 100, which may be provided e.g. in the main housing 100a. Alternatively or additionally, the preprocessing applied to the speech signal in the sound processing portion 120 prior to supplying the speech signal for reproduction by the loudspeaker assembly 120 may comprise other sound processing operations, e.g. one or more of the following: audio filtering (e.g. low-pass, high-pass or bandpass filtering) for controlling the frequency content of the speech signal, audio equalization for ensuring a naturally-sounding speech-signal in terms of its spectral content, noise suppression for reducing or eliminating background noise that may be present in the speech signal, echo cancellation for mitigating the effect of speech reproduced by the loudspeaker assembly 132 feeding back as vibrations on the surface of the mask 10.

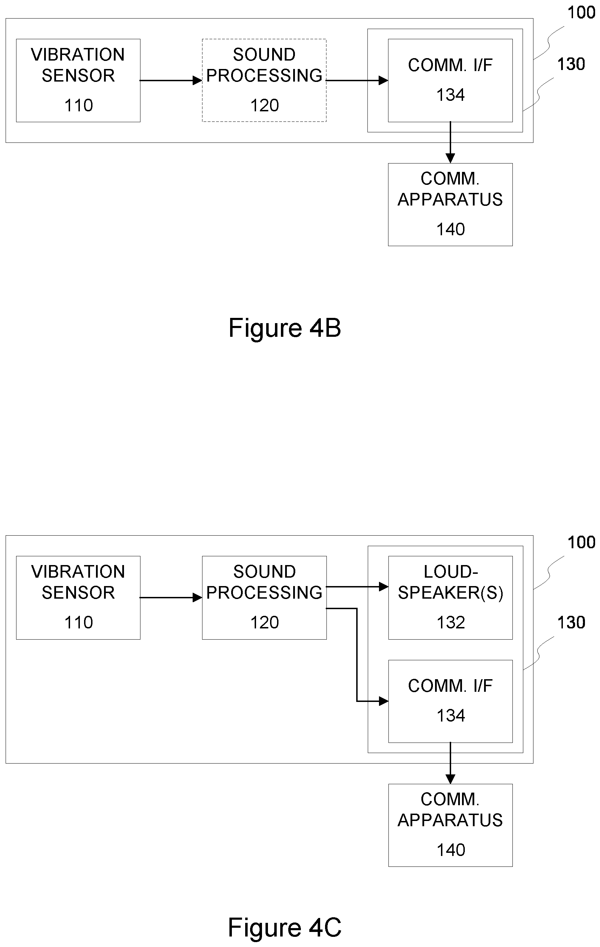

Figure 4B illustrates the sound transmission assembly 100 according to a second example within the framework of Figure 1, where the sound application assembly 130 comprises a communication interface 134 that is applicable for supplying the speech signal for transmission to one or more other apparatuses via a communication apparatus 140 coupled to the communication interface 134. Optionally, the sound transmission assembly 100 according to the second example further comprises the sound processing portion 120 arranged to preprocess the speech signal obtained from the vibration sensor assembly 110 before passing it to the communication interface 134. Hence, the sound transmission apparatus 100 according to the second example is applicable for transferring the speech uttered by a user of the respirator apparatus wearing the mask 10 of the respirator apparatus via the communication interface 134 and via the communication apparatus 140 coupled thereto to one or more other apparatuses for reproduction and/or further processing therein, thereby conveying the speech uttered by the user to one or more locations that may be respective locations in proximity of the user wearing the mask 10 and/or respective remote locations.

The communication interface 134 may be provided in the main housing 100a of the voice transmission assembly 100 and it is hence mountable (or mounted) to the mask 10 and dismountable from the mask 10 together with the main housing 100a. The communication interface 134 may be provided, for example, as a socket for receiving a plug that connects the communication apparatus 140 to the voice transmission assembly 130 via an electric cable or as a transceiver or a transmitter arranged for communication according to a short-range wireless communication technique such as Bluetooth (BT), or Bluetooth Low-Energy (BLE) with the communication apparatus 140. The communication apparatus 140 may apply any applicable communication technique for communication with one or more other apparatuses.

If the second example is implemented with the optional sound processing portion 120, the preprocessing applied therein may comprise transforming the speech signal from an analog form to a digital form, encoding of the (digital) speech signal and/or encryption of the (digital) speech signal. Alternatively or additionally, the preprocessing applied to the speech signal in the sound processing portion 120 prior to supplying the speech signal to the communication interface 134 may comprise other sound processing operations, e.g. one or more of the following: audio filtering (e.g. low-pass, high-pass or bandpass filtering) for controlling the frequency content of the speech signal, audio equalization for ensuring a naturally-sounding speech-signal in terms of its spectral content, noise suppression for reducing or eliminating background noise that may be present in the speech signal, echo cancellation for mitigating the effect of speech reproduced by the loudspeaker assembly 132 feeding back as vibrations on the surface of the mask 10.

Hence, the first and second examples described in the foregoing serve as respective examples of an approach where the sound application assembly 130 comprises a single sound application sub-assembly. In some examples, the single sound application sub-assembly is implicitly selected as the target application for the speech signal obtained from the vibration sensor assembly 110 and the speech signal is supplied thereto without an explicit selection by the user. In other examples that make use of the single sound application sub-assembly, the single sound application sub-assembly may be selectively enabled or disabled based on user input received via the UI of the sound transmission assembly 100. Consequently, if the single sound application sub-assembly is enabled, the speech signal is supplied thereto and the associated audio functionality (e.g. reproduction via the loudspeaker assembly 132 or transfer to the communication interface 134) is applied, whereas in case the single sound application sub-assembly is disabled, the speech signal is not supplied thereto and/or the associated audio functionality is not applied.

Figure 4C illustrates a block diagram of some components of a sound transmission assembly 100 according to a third example within the framework of Figure 1, where the sound application assembly 130 comprises the loudspeaker assembly 132 arranged to reproduce the speech signal at the location of the user (i.e. at the location of the respirator apparatus) and the communication interface 134 that is applicable for supplying the speech signal for transmission to one or more other apparatuses via the communication apparatus 140 coupled to the communication interface 134. Hence, the loudspeaker assembly 132 and the communication interface 134 serve as respective sound application sub-assemblies of the sound application assembly 130. Optionally, the sound transmission assembly 100 according to the third example further comprises the sound processing portion 120 arranged to preprocess the speech signal obtained from the vibration sensor assembly 110 before passing it to the loudspeaker assembly 133 and/or to the communication interface 134. Hence, the sound transmission apparatus 100 according to the third example is applicable for locally reproducing the speech uttered by a user of the respirator apparatus wearing the mask 10 of the respirator apparatus and/or for transferring the speech via the communication interface 134 and via the communication apparatus 140 to one or more other apparatuses for reproduction and/or further processing therein, thereby enabling both conveying the speech uttered by the user to one or more other persons residing in his/her proximity and conveying the speech to one or more locations that may be respective locations in proximity of the user wearing the mask 10 and/or respective remote locations.

If the third example is implemented with the optional sound processing portion 120, the preprocessing may be applied separately to the speech signal supplied to the loudspeaker assembly 132 and to the speech signal supplied to the communication interface 134. In particular, characteristics of the preprocessing applied to the speech signal supplied to the loudspeaker assembly 132 may be different from those of the preprocessing applied to the speech signal supplied to the communication interface 134 to account for possibly different audio characteristics and/or requirements of these sound application sub-assemblies. In this regard, the discussion on the preprocessing that may be applied to the speech signal supplied to the loudspeaker assembly 132 provided in the foregoing in context of the first example and the discussion on the preprocessing that may be applied to the speech signal supplied to the communication interface 134 provided in the foregoing in context of the second example apply also to the third example, *mutatis mutandis.*

The third example described in the foregoing serves as an example of the sound application assembly 130 that comprises two or more sound application sub-assemblies, each arranged to make use of the speech signal obtained from the vibration sensor assembly 110 in a manner different from that of the other sound application sub-assemblies. In some examples where the sound application assembly 130 comprises two or more sound application sub-assemblies, the speech signal obtained from the vibration sensor assembly 110 may be supplied to each of the sound application sub-assemblies. This corresponds to (automatically) enabling each of the two or more sound application sub-assemblies. In other examples where the sound application assembly 130 comprises two or more sound application sub-assemblies, at least one (e.g. each) of the two or more sound application sub-assemblies may be selectively enabled or disabled based on user input received via the UI of the sound transmission assembly 100. Hence, the UI may enable selecting one or more of the two or more sound application sub-assemblies as respective target applications for the speech signal. Consequently, the speech signal may be supplied only to those speech application sub-assemblies that are currently enabled.

If the sound transmission assembly 100 where the sound application assembly 130 comprises two or more sound application sub-assemblies is implemented with the optional sound processing portion 120, along the lines discussed in the foregoing in context of the third example, the sound processing portion 120 is arranged to apply respective predefined preprocessing to the speech signal before its supply to the respective one of the sound application sub-assembly, where characteristics of the applied preprocessing are defined separately for each of the two or more sound application sub-assemblies. This enables accounting for possibly different audio characteristics and/or requirements of the two or more sound application sub-assemblies. Moreover, the preprocessing to be applied in the sound processing portion 120 to the speech signal before its supply to a given sound application sub-assembly may be selectively enabled or disabled in accordance with enablement or disablement of the respective sound application sub-assembly.

In some examples where the sound transmission assembly 100 is implemented with the sound processing portion 120, the sound processing portion 120 may comprise a voice activity detector (VAD) that is arranged to classify the speech signal obtained from the vibration sensor assembly 110 as speech or non-speech and to control operation of the sound application assembly 130 accordingly. The VAD may include a VAD algorithm known in the art, arranged to process the speech signal supplied thereto as a time series of frames and classify each frame as one of speech or non-speech in accordance with the temporal and/or spectral characteristics of the speech signal in the respective frame and/or in temporally adjacent frames. The VAD classification may be applied such that only those frames (i.e. those time periods of the speech signal) that are classified as speech are supplied to sound application assembly 130 while those frames (i.e. those time periods of the speech signal) that are classified as non-speech are not supplied to the sound application assembly 130. Additionally or alternatively, the sound application assembly 130 may be selectively enabled or disabled in accordance with the VAD classification, e.g. such that the sound application assembly 130 is enabled for those frames (i.e. those time periods of the speech signal) that are classified as speech and disabled for those frames (i.e. those time periods of the speech signal) that are classified as non-speech. In a further example, for the sound application assembly 130 that comprises two or more sound application sub-assemblies, the VAD may be employed such that the VAD classification concerns only a predefined subset of the sound application sub-assemblies. The speech signal classification based on the VAD decisions is typically helpful, for example, in distinguishing the actual speech uttered by a user wearing the mask of the respirator apparatus from vibrations induced to the mask from the environment of the user.

The first, second and third examples described in the foregoing rely on the loudspeaker assembly 132 and/or the communication interface 134 as the respective sound application sub-assemblies of the sound application assembly 130. These are, however, non-limiting examples, whereas in other examples the sound application assembly 130 may comprise one or more other sound application sub-assemblies in addition to or instead of the loudspeaker assembly 132 and/or the communication interface 134. Non-limiting examples of such other sound application sub-assemblies that rely on the speech signal obtained from the vibration sensor assembly 110 include voice-based control of (other) functionalities enabled by the sound transmission assembly 110 or an apparatus coupled thereto and speech recognition for deriving a textual description of the speech uttered by a user wearing the mask 10 for storage and/or for transmission to one or more other apparatuses.

The examples of the sound transmission assembly 100 described in the foregoing comprise a single vibration sensor assembly 110. In further examples, the sound transmission assembly 100 may comprise two or more vibration sensor assemblies for attachment at different locations on the outer surface of the mask 10, whereas in general case the sound transmission assembly 100 according to the present disclosure comprises at least one vibration sensor assembly 110 of the kind described in the foregoing. In various examples where two or more vibration sensor assemblies 110 are involved, the speech signal supplied to the sound application assembly 130 or to a certain sound application sub-assembly of the sound application assembly 130 may be the one (or based on the one) generated at the selected one of the two or more vibration sensors assemblies 110 or it may be derived based on the respective speech signals generated at the two or more vibration sensor assemblies 110.

In a scenario where one the respective speech signals generated in the two or more vibration sensor assemblies 110 is selected for provision to the sound application assembly 130 or to a sound application sub-assembly thereof, the selection may be made, for example, based on respective characteristics of the generated speech signals e.g. in terms of signal power, frequency response and/or signal-to-noise ratio (SNR). Since the vibrations from the speech of the user wearing the mask 10 as well as those arising from the acoustic feedback from the loudspeaker assembly 132 (if applied) are typically captured at different amplitudes and/or at different frequency responses at different locations on the surface of the mask 10, the possibility to choose one of the two or more generated speech signals e.g. allows for choosing the generated speech signal that in the given usage scenario has the highest signal power or provides the best signal-to-noise ratio SNR. In a scenario where the speech signal supplied to the sound application assembly 130 or to a sound application sub-assembly thereof is derived based on the respective speech signals generated at the two or more vibration sensor assemblies 110, e.g. sensor array techniques known in the art may be applied in derivation of the speech signal. Since, as described above, the vibrations that represent the speech of the user waring the mask 10 and the vibrations arising from the acoustic feedback are conveyed at different amplitudes and/or at different frequency response at different locations on the surface of the mask 10, such an approach enables deriving the speech signal for use in the sound application assembly 130 as a combination of respective speech signals generated at different locations on the outer surface of the mask 10 in a manner that optimizes the SNR, the signal power and/or the frequency response of the derived speech signal while at the same time keeping the effect of acoustic feedback to a minimum.

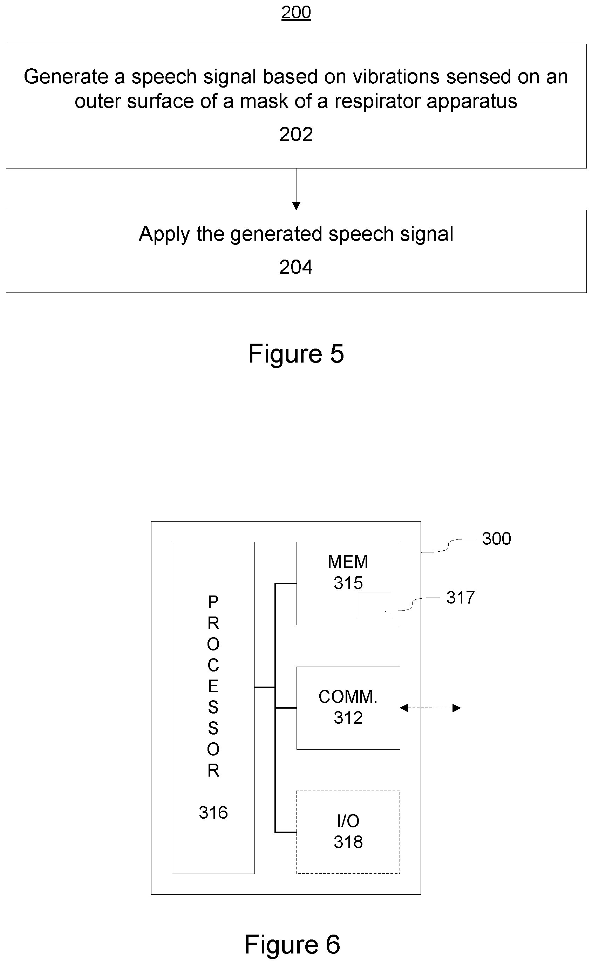

Some aspects of operation of the sound transmission assembly 100 described in the foregoing may be also described as steps of a method. As an example in this regard, Figure 5 depicts a flowchart that represents a method 200 for sound transmission for (or in) the respirator apparatus that comprises the mouth-covering mask 10, the method 200 comprising the following steps:
- generating the speech signal based on vibrations sensed on the outer surface of the mask 10 (block 202);
- applying the generated speech signal (block 204).

The respective operations described with references to blocks 202 and 204 pertaining to the method 200 may be varied or complemented in a number of ways, for example as described in the foregoing and/or in the following with references to the respective characteristics and/or operation of the sound transmission assembly 100. As a particular example in this regard, the aspect applying the generated speech signal (cf. block 204) may comprise reproducing the generated speech signal via the loudspeaker assembly 132 mounted to the mask 10 and/or supplying the generated speech signal to the communication interface 134 for transmission to one or more other apparatuses by the communication apparatus 140 coupled to the communication interface 134.

Figure 6 illustrates a block diagram of some components of an exemplifying apparatus 300. The apparatus 300 may comprise further components, elements or portions that are not depicted in Figure 6. The apparatus 300 may be referred to as a computing apparatus or as a computer apparatus and it may be employed e.g. in implementing at least some aspects of operation of the sound application assembly 130 and/or the sound processing portion 120 (if applied). The apparatus 300 comprises a processor 316 and a memory 315 for storing data and computer program code 317. The memory 315 and a portion of the computer program code 317 stored therein may be further arranged to, with the processor 316, to implement at least some aspects of operation of the sound application assembly 130 and/or the sound processing portion 120 (if applied).

The apparatus 300 may comprise a communication portion 312 for communication with the communication apparatus 140 and the communication portion 312 may be applied to implement the communication interface 134 (if applied). The communication portion 312 enables wired or wireless communication with the communication apparatus 140. The apparatus 300 may, optionally, further comprise one or more user I/O (input/output) components 318 that may be arranged, possibly together with the processor 316 and a portion of the computer program code 317, to provide the III of the sound transmission assembly 100. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent/ dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some aspects of operation of the sound application assembly 130 and/or the sound processing portion 120 (if applied).

Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some aspects of operation of the sound application assembly 130 and/or the sound processing portion 120 (if applied).

The computer programs stored in the memory 315 may be provided e.g. as a respective computer program product comprising at least one computer-readable non-transitory medium having the computer program code 317 stored thereon, the computer program code, when executed by the apparatus 300, causes the apparatus 300 at least to perform at least some aspects of operation of the sound application assembly 130 and/or the sound processing portion 120 (if applied). The computer-readable non-transitory medium may comprise a memory device or a record medium that tangibly embodies the computer program. As another example, the computer program may be provided as a signal configured to reliably transfer the computer program.

References to a processor herein should not be understood to encompass only programmable processors, but also dedicated circuits such as field-programmable gate arrays (FPGA), application specific circuits (ASIC), signal processors, etc.

## Claims

1. A sound transmission assembly (100) for a respirator apparatus that comprises as a mouth-covering mask (10) to be worn by a user of the respirator apparatus, the sound transmission assembly (100) comprising:
at least one vibration sensor assembly (110) arranged to generate a speech signal based on vibrations sensed on an outer surface of said mask (10); and
a sound application assembly (130) arranged to apply the speech signal obtained from the at least one vibration sensor assembly (110).

2. A sound transmission assembly (100) according to claim 1, wherein each of the at least one vibration sensor assembly (110) comprises:
a sensor housing (110a) for arrangement into contact with the outer surface of said mask (10); and
a vibration sensor (110c) arranged into contact with the sensor housing (110a) to generate the speech signal from vibrations induced thereto via the sensor housing (110a).

3. A sound transmission assembly (100) according to claim 1 or 2, wherein each of the at least one vibration sensor assembly (110) comprises an attachment mechanism for attaching the respective vibration sensor assembly (110) to said mask (10) such that it is brought into contact with the outer surface of the mask (10).

4. A sound transmission assembly (100) according to any of claims 1 to 3, wherein the sound application assembly (130) comprises a loudspeaker assembly (132) that is mountable to said mask (10) and arranged to reproduce the speech signal at the location of the user.

5. A sound transmission assembly (100) according to claim 4, further comprising a sound processing portion (120) arranged to apply predefined preprocessing to the speech signal before its reproduction by the loudspeaker assembly (132).

6. A sound transmission assembly (100) according to claim 5, wherein the predefined preprocessing comprises amplification of the speech signal.

7. A sound transmission assembly (100) according to any of claims 4 to 6, further comprising an isolation member for arrangement between the loudspeaker assembly (132) and said mask (10), where the isolation member is arranged to suppress transmission of vibrations induced in the loudspeaker assembly (132) to said mask (10).

8. A sound transmission assembly (100) according to any of claims 1 to 7, wherein the sound application assembly (130) comprises a communication interface (134) for supplying the speech signal for transmission to one or more other apparatuses by a communication apparatus (140) coupled to the communication interface (134).

9. A sound transmission assembly (100) according to any of claims 1 to 3, wherein
the sound application assembly (130) comprises two or more sound application sub-assemblies, each arranged to apply the speech signal obtained from the at least one vibration sensor assembly (110) in a manner different from that of the other speech application sub-assemblies; and
the sound transmission assembly (100) further comprises a user interface that enables selectively enabling or disabling at least one of the two or more sound application sub-assemblies.

10. A sound transmission assembly (100) according to claim 9, wherein
wherein the two or more sound application sub-assemblies comprise
a loudspeaker assembly (132) that is attachable to said mask (10) and arranged for reproduction of the speech signal at the location of the user, and
a communication interface (134) for supplying the speech signal for transmission to one or more other apparatuses by a communication apparatus (140) coupled to the communication interface (134), and
wherein the user interface enables selectively enabling or disabling at least one of the loudspeaker assembly (132) and the communication interface (134).

11. A sound transmission assembly (100) according to claim 9 or 10, further comprising a sound processing portion (120) arranged to apply respective predefined preprocessing to the speech signal before its supply to the respective one of the sound application sub-assembly, wherein characteristics of said preprocessing are defined separately for each sound application sub-assembly.

12. A sound transmission assembly (100) according to any of claims 1 to 11, comprising a sound processing portion (120) comprising a voice activity detector, VAD, wherein the VAD is arranged to classify the speech signal obtained from the at least one vibration sensor assembly (110) as speech or non-speech and control operation of the sound application assembly (130) in accordance with said classification.

13. A respirator apparatus comprising:
a mouth-covering mask (10) to be worn by a user of the respirator apparatus; and
a sound transmission assembly (100) according to any of claims 1 to 12.

14. A method (200) for sound transmission for a respirator apparatus that comprises as a mouth-covering mask (10) to be worn by a user of the respirator apparatus, the method (200) comprising:
generating (202) a speech signal based on vibrations sensed on an outer surface of said mask (10); and
applying (204) the generated speech signal.

15. A method (200) according to claim 14, wherein applying (204) the generated speech signal comprises at least one of the following:
reproducing the generated speech signal via a loudspeaker assembly (132) mounted to said mask (10),
supplying the generated speech signal to a communication interface (134) for transmission to one or more other apparatuses by a communication apparatus (140) coupled to the communication interface (134).
